(19) Europäisches Patentamt
European Patent Office
Office européen des brevets

(11) EP 3 901 179 A1

(12) **EUROPEAN PATENT APPLICATION**

(43) Date of publication:
**27.10.2021 Bulletin 2021/43**

(21) Application number: **21169688.5**

(22) Date of filing: **21.04.2021**

(51) Int Cl.:
***C08B 37/08*** *(2006.01)* ***C08L 5/08*** *(2006.01)*
***C09D 105/08*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2020 BE 202005274**

(71) Applicant: **Protein Farm bvba**
**3540 Herk-de-Stad (BE)**

(72) Inventors:
- **BAETEN, Emmanuel**
**3540 Herk-de-Stad (BE)**
- **SHAVANDI, Amin**
**1000 Bruxelles (BE)**
- **VERWILGHEN, Frederic**
**3540 Herk-de-Stad (BE)**

(74) Representative: **Brantsandpatents bvba**
**Pauline Van Pottelsberghelaan 24**
**9051 Ghent (BE)**

(54) **CHITIN FOR USE IN PRE- AND POST HARVEST APPLICATIONS**

(57) The current invention relates to chitin or its derivative chitosan or chitosan hydrochloride wherein said chitin or said derivative have an $\alpha$-crystal structure and a crystallinity of less than 80%. The current invention also relates to a composition comprising chitin or its derivative chitosan or chitosan hydrochloride. The current invention also relates to a coating for agricultural plants, fruits or vegetables.

In addition, the current invention relates to a use of chitin or its derivative chitosan or chitosan hydrochloride, the composition or the coating in pre- and post-harvest application of plants, fruits and vegetables or to control pre- or postharvest diseases.

Also, the current invention relates to a method of protecting a plant, fruit or vegetable against pre- or post-harvest decay, to a method of curing a plant, fruit or vegetable of pre- or postharvest decay and to a method for coating plants, fruits or vegetables.

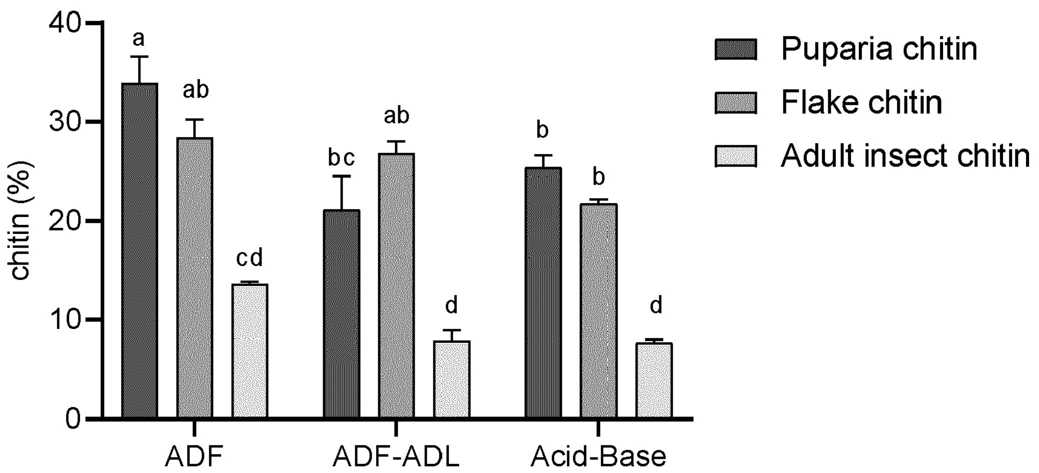


**FIG. 1**

EP 3 901 179 A1

## Description

## FIELD OF THE INVENTION

The present invention relates to chitin and derivatives for use in pre- and post harvest applications.

## BACKGROUND

Black soldier fly BSF (*Hermetia illucens*) is an efficient converter of organic waste as the largest organic waste. BSF larvae with a fast growth rate can rapidly decompose organic waste and convert it into economically valuable biomass of 41-44% protein and 15-49% fat, with reduced bad odor and eliminated potential diseases. This multi-beneficial breeding insect has attracted much attention in the last decade. The high-quality protein-rich insect biomass has increasingly become a sustainable feed for farmed fish industries such as tuna and salmon, where the feed is normally sourced from wild fish stocks. Insect cuticles, shells of crabs, lobsters, shrimp, fungal, yeast cell walls, and marine sponges contain $\alpha$-chitin as a stable, resistant, and abundant biopolymer arranged in anti-parallel strands. Chitin ($(C_8H_{13}O_5N)_n$), a long-chain polymer of N-acetylglucosamine, is a derivative of glucose. The presence of the chitin along with the protein and lipid can affect the nutrients digestibility; therefore there is a chitin rich side stream from the insect farms, which is a biopolymer with a versatile range of applications such as biochemical and biomedical applications.

Chitin and its derivative chitosan are conventionally produced from shrimp or crab shell, and there is a large number of publications regarding their modification, function, and physiochemical properties. Chitosan is a linear polysaccharide composed of randomly distributed $\beta$-(1$\rightarrow$4)-linked D-glucosamine (deacetylated unit) and N-acetyl-D-glucosamine (acetylated unit). It is made by treating the chitin with an alkaline substance, like sodium hydroxide. Chitosan is produced commercially by deacetylation of chitin, using a chitin-deacetylase. A well-known chitosan derivative is chitosan hydrochloride which is readily soluble in water.

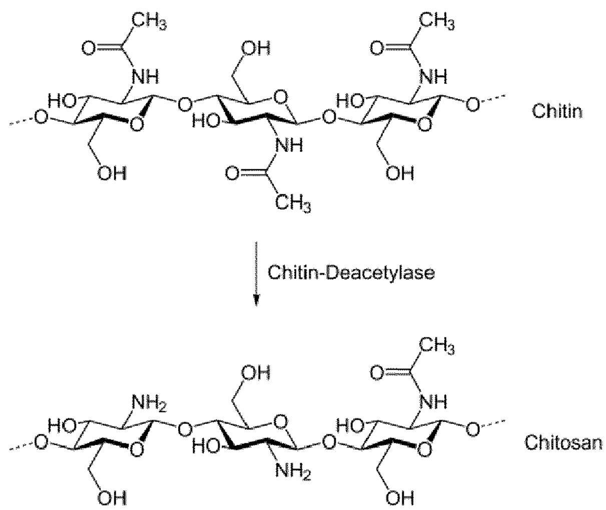


Nevertheless, the chitin generated as a sidestream from the insect farms has not yet been well investigated, measured and characterized. While there are several reports on the content and properties of various insect-derived chitin, there is a lack of precise measurement and characterization of chitin and the sidestream fraction from the insect farms has not yet been investigated to valorize the biopolymer. In addition, biopolymers extracted from the insects can have physicochemical properties different than the chitin normally derived from shrimp and crab, which can affect its final applications. For example, pupae shells and adult insects reported having a medium molecular weight, lower than some crustacean groups, such as lobster, crab shells, and fungi but higher than shrimp.

A growing trend around the world is the exploration of new alternatives to control pre- and postharvest pathogenic diseases, such as on fruits and vegetables, prioritizing methods that reduce disease incidence and avoid negative and adverse effects on human health from the excessive use of synthetic fungicides.

Edible coatings formed with safe materials offer several advantages over the synthetics, such as biodegradable and environmentally friendly materials. In addition, some of these coatings have the potential to improve the appearance of foods and retard or inhibit the growth of pathogenic and spoiled microorganisms. However, development of edible coatings must fulfill several requirements to be accepted as an appropriate alternative to synthetic materials. Basically, edible coatings must be water-resistant and stable during cold storage, not causing depletion of O2 or excessive CO2

accumulation. They must be minimally permeable to water vapor, improve fruit gloss and appearance, not be sticky, have a good drying performance, maintain fresh product quality without releasing undesired odors, have low viscosity, and be translucent and affordable.

Chitosan (CH) obtained from the exoskeleton of crustaceans, such as shrimps and crabs has become a potent alternative treatment for extending storage life and controlling decay of fruit and vegetables due to its natural antimicrobial effects and elicitation activities in plant tissue. Since the early 1990s, many authors have reported the ability of chitosan to form edible films that have been applied in a variety of fruits.

Chitine and/or derivatives have been characterized in multiple studies, amongst which by Murat Kaya et al., International Journal of Biological Macromolecules, 65 (2014); Murat Kaya et al., International Journal of Biological Macromolecules 79 (2015); Murat Kaya et al., International Journal of Biological Macromolecules 72 (2015); Huarui Want et al., International Journal of Biological Macromolecules 149 (2020), Adam Wasko et al., International Journal of Biological Macromolecules 92 (2016); M. Zang et al., International Journal of Biological Macromolecules 27 (2000); Huet Gael et al., Carbohydrate Polymers 228 (2020); and in Purkayastha et al., Journal Of Polymer And Environment 28 (2020).

Coating compositions for protecting fruits against decay, comprising chitosan, are disclosed in CN 107 057 472.

Using chitosan obtained from crustaceans on food, however, has at least one major drawback as it potentially poses a risk to people with seafood allergies. Furthermore the physicochemical properties of chitosan from crustacean have been found to be less suitable for the use as described above.

The present invention aims to resolve at least some of the problems and disadvantages mentioned above. The aim of the invention is to provide a method which eliminates those disadvantages. The present invention targets at solving at least one of the aforementioned disadvantages.

## DESCRIPTION OF FIGURES

The following description of the figures of specific embodiments of the invention is merely exemplary in nature and is not intended to limit the present teachings, their application or uses.

**Figure 1** shows the yield of chitin obtained from different fractions of Puparia, Flake and Adult insect using the three different isolation methods. $^{a-d}$ bars that do not share a letter are significantly different at $p<0.05$.

**Figure 2** shows the FTIR spectra of untreated samples (A), chitin samples obtained through acid-base method (B), and ADF-ADL method (C).

**Figure 3** shows the thermal gravimetric analysis of the black soldier fly (BSF) chitin samples obtained from Puparia, Flake and the Adult Insect.

**Figure 4** shows the X-ray diffraction patterns and crystallinity of the chitin samples obtained from Insects (Puparia, Flake and Adult insect) using different chitin isolation methods of Acid-base (A) and ADF-ADL (B) and the commercially available shrimp shell chitin.

**Figure 5** shows the morphological properties of commercially available shrimp shell chitin and chitin samples obtained from the black soldier fly insect farm (Adult insect, Puparia, and Flakes) using a scanning electron microscope.

## DETAILED DESCRIPTION OF THE INVENTION

The present invention concerns chitin and derivatives for use in pre- and post harvest applications.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the

presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.,* any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In present context, "chitin", $((C_8H_{13}O_5N)_n)$, is a long-chain polymer of N-acetylglucosamine, and a derivative of glucose.

"Chitosan" is a linear polysaccharide composed of randomly distributed β-(1→4)-linked D-glucosamine (deacetylated unit) and N-acetyl-D-glucosamine (acetylated unit).

Chitosan can be made by treating chitin with an alkaline substance, like sodium hydroxide. Chitosan is produced commercially by deacetylation of chitin, using a chitin-deacetylase.

A well-known chitosan derivative is "chitosan hydrochloride" which is readily soluble in water.

Chitosan hydrochloride can be made by treating chitosan with an acid.

"Pre-harvest" in present context refers to activities on the farm that occur before the crops are harvested.

Typically the products used for pre-harvest treatments are sprayed, nebulized or applied by other means on the crops, at different stages of their growth, including stages at which flower or fruit are present.

"Post-harvest" in present context refers to the stage immediately following harvest, including cooling, cleaning, sorting and packing. The instant a crop, fruit or vegetable is removed from the ground, or separated from its parent plant, it begins to deteriorate. Postharvest treatment largely determines final quality, whether a crop, fruit or vegetable is sold for fresh consumption, or used as an ingredient in a processed food product.

"Acid base method" in present context is a conventional method to extract, purify and determine the yield of chitin with acid and base (HCl and NaOH) as described in Liu et al., 2012.

"ADF-ADL method" is a method to determine the yield of chitin combining Acid Detergent Fiber (ADF) and Acid Detergent Lignin (ADL) where the remaining amino acid in the chitin samples is removed and the chitin content can be determined. ADF and ADL are described by Hann et al, 2018. By subtracting the ADF from the ADL value, ADF-ADL is calculated.

"$DTG_{max}$" value in the context of thermal stability refers to the maximum degradation temperature. DTG is a type of thermal analysis in which the rate of material weight changes upon heating is plotted against temperature and used to simplify reading the weight versus temperature thermogram peaks which occur close together. The $DTG_{max}$, is the peak maxima of the highest peak, and is the temperature at which the rate of degradation of your sample is the highest. It is a parameter to judge thermal stability of the sample. The higher $DTG_{max}$, the higher the thermal stability of the sample. The analysis is referred to as "Differential Thermal Analysis" (DTA).

In a first aspect, present invention relates to chitin or its derivative chitosan or chitosan hydrochloride wherein said chitin or said derivative have an α-crystal structure and a crystallinity of less than 80%.

Preferably, the chitin or derivative have an α-crystal structure and a crystallinity of less than 80%, obtained by using the acid-base purification method or ADF-ADL method.

Even more preferably, the chitin or derivative have an $\alpha$-crystal structure and a crystallinity of less than 80%, obtained by using the ADF-ADL method.

In an embodiment, the chitin or its derivative chitosan or chitosan hydrochloride have a thermal stability with a DTGmax value of between about 350,0 °C to about 370,0 °C , measured by differential thermal analysis (DTA).

In an embodiment, the crystallinity of the chitin or its derivative chitosan or chitosan hydrochloride ranges from 30 to 80 %.

In another embodiment, the crystallinity of the chitin or its derivative chitosan or chitosan hydrochloride ranges from 45 to 50 %.

In another embodiment, the crystallinity of the chitin or its derivative chitosan or chitosan hydrochloride ranges from 70 to 80 %.

In another embodiment, the crystallinity of the chitin or its derivative chitosan or chitosan hydrochloride ranges from 30 to 50 %.

In an embodiment, the chitin or derivative has a molecular weight of about 1-2000 kDa. Preferably the molecular weight is 1-1900 kDa, more preferably 1-1800 kDa, more preferably 1-1700 kDa, more preferably 1-1600 kDa, more preferably 1-1500 kDa, more preferably 1-1400 kDa, more preferably 1-1300 kDa, more preferably 1-1200 kDa, more preferably 1-1100 kDa, more preferably 1-1000 kDa, more preferably 1-900 kDa, more preferably 1-800 kDa, more preferably 1-700 kDa, more preferably 1-600 kDa, more preferably 1-500 kDa, more preferably 1-400 kDa, more preferably 1-300 kDa, more preferably 1-200 kDa, more preferably 1-100 kDa, more preferably 1-50 kDa. In another or further embodiment, the chitin or derivative has a molecular weight of about 50-1000 kDa, preferably 150-900 kDa, more preferably 250-800 kDa, more preferably 300-800 kDa, more preferably 350-750 kDa, more preferably 400-700 kDa, more preferably 450-650 kDa, most preferably 500-600 kDa.

In an embodiment, it was shown that the smaller the chitin or derivative is, the better its function as elicitor/fungicide as they can cross cellular walls (mainly for pre-harvest). The larger they are, the better they function as a physical barrier/protection. The latter is mainly important for post-harvest applications.

In an embodiment, the chitin or derivative has a C/N content ratio of at least 7.

In a preferred embodiment, chitin or derivative has a C/N content ratio of at least 7 preferably obtained by using the acid base purification method.

In an embodiment, the chitin or its derivative chitosan or chitosan hydrochloride has a degree of acetylation of at least 95 %.

In an embodiment, the chitin or derivatives are derived from insects.

In a preferred embodiment, the chitin or derivatives are derived from Black Soldier Fly, more preferably from puparia, flakes (coming from a proprietary extraction process of BSF larvae, and, aside from chitin, also comprising the protein fraction and a limited amount of fatty acids), or adult insects of Black Soldier Fly.

In a second aspect, the present invention relates to a composition comprising chitin or its derivative chitosan or chitosan hydrochloride as described before in any of the embodiments, as active ingredient.

In an embodiment, the composition is a liquid, a powder or a spray.

In an embodiment, the composition comprises an effective amount of chitin or its derivative.

In a further preferred embodiment, the effective amount is from about 0,05% to about 100%. In another further preferred embodiment, the effective amount is from about 0.05% to about 20%.

In an embodiment, the composition further comprises synthetic or natural polymers.

As a non-limiting example, such natural polymer can be lignin or pectin.

In an embodiment, the composition is combined with other active ingredients, such as antibacterial and antifungal ingredients.

In a third aspect, the invention relates to a coating for agricultural plants, fruits or vegetables, wherein said coating comprises, in amounts effective for biocontrol activity, the chitin or composition as described before in any of the embodiments, effective for the biocontrol of pre- and postharvest diseases.

In an embodiment, the coating further comprises a surfactant, and at least 5 wt% polyalkylene glycol.

In a further embodiment, the polyalkylene glycol has an average molecular weight in the range from 150 to 20000 g/mol.

In another or further embodiment, the polyalkylene glycol has a melting point below 50 °C.

In another or further embodiment, the polyalkylene glycol is polyethylene glycol or polypropylene glycol.

In another or further embodiment, the coating composition comprises at least 0,1 wt% surfactant.

In another or further embodiment, the surfactant is a nonionic surfactant.

In another or further embodiment, the coating composition comprises less than 1.0 wt% oil and wax.

In another or further embodiment, the coating further comprises synthetic or natural polymers.

As a non-limiting example, such natural polymer can be lignin or pectin.

In another or further embodiment, the coating further comprises anti-fungal and/or antibacterial agents.

Preferably, said anti-fungal or antibacterial agents are natural agents.

In another of further embodiment, the coating further comprises separate or structural elements.

Chitin, chitosan or derivatives can bind to these separate or structural elements to allow better stability, activity, plasticity or other characteristics known in the art.

In an embodiment, the coating further comprises one or more types of microorganisms, effective for the biocontrol of pre- and postharvest diseases.

In a fourth aspect, present invention relates to a use. More particular, the invention relates to a use of chitin or its derivative chitosan or chitosan hydrochloride, the composition or coating as described above in any of the embodiments, in pre- and post-harvest application of plants (including leafs, stem, roots and seeds), fruits and vegetables, with the aim to elicit (act as an elicitor) and/or protect them and/or to control pre- or postharvest diseases.

In an embodiment, the chitin or derivative, or composition or coating is applied to the surface of a plant, fruit or vegetable by spraying, sprinkling, brushing, submerging, or by any other means on the plant, fruit, vegetable or seed.

In a fifth aspect, the present invention relates to a method of protecting a plant, fruit or vegetable against pre- or postharvest decay, comprising coating, spraying, sprinkling, brushing, submerging, or by any other means, the surface of the plant, fruit, vegetable or seed with an effective amount of the chitin, composition or coating as described above in any of the embodiments.

In a sixth aspect, the present invention relates to a method of curing a plant, fruit or vegetable of pre- or postharvest decay, comprising coating, spraying, sprinkling, brushing or by any other means, the surfaces of the plant, fruit, vegetable or seed with an effective amount of the chitin, composition or coating as described above in any of the embodiments.

In a seventh aspect, the present invention relates to a method of eliciting the natural defense of plant, fruit or vegetable in a pre- or postharvest stage, comprising coating, spraying, sprinkling, brushing or by any other means known in the art, the surfaces of the plant, fruit, vegetable or seed with an effective amount of the chitin, composition or coating as described above in any of the embodiments.

In a final aspect, the present invention relates to a method for coating plants, fruits or vegetables comprising the application of chitin, a coating or composition as described above in any of the embodiments to the surface of the food product.

The present invention will now be described in more details, referring to examples that are not limitative.

## EXAMPLES AND/OR DESCRIPTION OF FIGURES

The present invention will now be further exemplified with reference to the following examples. The present invention is in no way limited to the given examples or to the embodiments presented in the figures.

## EXAMPLE 1

Chitin isolation method could influence the final properties of an extracted chitin in terms of purity, crystallinity, thermal and mechanical stability. The insect chitin is covalently bonded to cuticular protein during the sclerotization process which can make its determination erroneous using normal gravimetric measurement. This study aims to isolate and characterize the physicochemical properties of different chitin fractions obtained from the Adult insect, Puparia, and Flakes generated after separating the oil. For this purpose, the conventional chitin isolation method, acid-base (HCl and NaOH) is compared with a two-step method based on the measurement of acid detergent fiber (ADF) and acid detergent lignin (ADL) where the remaining amino acid in the chitin samples is removed and the chitin content can be accurately determined.

### Materials and Methods

Black Soldier Fly samples of the exoskeleton (Puparia), flakes obtained after the oil extraction (Flakes), and intact insects (Adult insect) were used. The insects had been reared on plant waste and food industry waste streams. The samples stored in tight plastic containers in a -20°C freezer before the experiment. Commercial shrimp chitin (C7170), which used as the benchmark and acetic acid, were purchased from Sigma (Sigma Chemical, St. Louis, MO, USA). Sodium hydroxide (NaOH) were purchased from BDH (Leuven, Belgium) and hexane, high purity Cetrimonium bromide (CTAB), and sulfuric acid were from VWR.

*Conventional chitin extraction with acid and base*

The samples (Adult insect, Flake, and Puparia) were dried in an oven at 50°C overnight then grounded by a Waring lab grinder (Waring Commercial, CT, USA) and samples with 0.5 mm particle size were kept in an airtight container at 4°C. The preparation of chitin from insect samples was carried out as described by Liu et al., 2012. Briefly,

the powdered samples (5g) were added slowly to 250 mL of 1M HCl, the solution temperature was brought to 100°C and was stirred at that temperature for 30 min to remove pigments and minerals. The samples were washed to neutrality and then treated with 250 mL of 1M NaOH for deproteinization for 24 hours. The light-yellow chitin samples were obtained after washing with distilled water until neutrality and then dried in an oven at 50°C. The obtained dried chitin was weighed to determine the yield.

*ADF, ADL and ADF-ADL chitin measurements*

The ADF and ADL measurements were performed following the method previously reported (Hahn, Roth et al. 2018). Briefly, after defatting the ground samples with hexane, 1g of dried sample was suspended in 100 mL of a 0.5 M $H_2SO_4$ with 20g/L of CTAB in a 250 mL round bottom flask. The suspension was boiled under reflux for one hour and then vacuum filtered using a dried and weighed 50 mL filter crucible (VitraPOR® glass filters) with a pore size of 40 $\mu$m. The retentate was soaked in distilled water (80°C, 50 mL), then vacuum filtered and washed with distilled water twice following by one step wash with 50 mL of acetone and then dried overnight. The ADF content was measured as the residual weight of biomass in relation to the initial weight of the dry sample before lipid extraction. To determine the ADL content, the crucible was put in a 150 mL beaker and the filter cake was covered with 25mL of 12M $H_2SO_4$ followed by stirring and after acid permeated through the filter an additional 25 mL of the acid was added again after 30 minutes. After 3 hours, the suspension was vacuum filtrated and washed until neutrality with 80°C water. The crucible was weighed after drying overnight. Eventually, the crucible subjected to 550°C heating in a furnace for 4.5 hours and weighed after cooling. The ADL content was calculated according to ADF values and by subtracting the ADF from the ADL values, the ADF-ADL was calculated. The ADF and ADL values were determined for all samples with a minimum of three replicates, and the values were compared with the values obtained from the conventional acid-base method.

*Degree of deacetylation*

Carbon and Nitrogen (C/N) analysis was done using a Eurovector EA3000 Analyzer to determine the degree of deacetylation (DDA) of the chitin samples. The DDA was calculated using the equation:

$$\text{DDA (\%)} = 6.857 - \text{C/N}/1.7143$$

Where C/N is the ratio (w/w) of carbon to nitrogen.

The distribution of the crystal structure in chitin matrix was evaluated using an X-Ray Diffractometer (XRD; Bruker ecoD8 advance) in the range of 5°<2$\theta$<70° with Cu K$\alpha$ irradiation (k=0.154060 nm). The diffractometer performed at 40 keV and 25 mhA and continuous scan with a step size of 0.019 and scan step time of 96.00s. The crystalline index value (CrI) was calculated via the following equation:

$$CrL = [\frac{(I_{110} - I_{am})}{I_{110}}] \times 100$$

where $I_{110}$ is the maximum intensity at 2$\theta$ = 20° and $I_{am}$ is the intensity of amorphous diffraction at 2$\theta$ = 13.

The functional groups of the samples were identified using Fourier transform infrared spectroscopy (FT-IR; Bruker Vertex 70) over the region 400-4,000 $cm^{-1}$ with 2 $cm^{-1}$ spectral resolution using the KBr pellet technique of Kumar et al., 2012. The spectra characterization was performed using previously recorded references for chemical bonds and the peaks were assigned to the correlated chemical bonds.

Thermogravimetric analysis (TGA-DTA) of samples was carried out using a TA instrument (Netzsch STA 409 PC coupled with Netzsch QMS 403C) from 30°C to 1000°C at 10°C/min heating rate under oxygen flow (60mL/min) using 50 mg of the samples. Scanning electron microscope (SEM) (Hitachi SU-70) was used to examine the microstructure and microscopic characteristics of the surface of the chitin samples.

*Statistical analysis*

The statistical analyses were performed using three independent samples, and the results were reported as mean $\pm$ standard error of the means. Data were analyzed as repeated measurement analysis of variance (ANOVA) to investigate the effects of the methods used for chitin isolation and the source and their interactions on the measured yield of chitin. Significant differences between means and multiple comparisons between means were analyzed by Tukey's test using Minitab 19 Statistical Software (Minitab®, PA, United States).

## Results and Discussion

*Effect of isolation method and the source of sample*

Acid detergent fiber has been used to determine the cellulose and lignin residuals after treatment with sulfuric acid and CTAB, however considering the structural similarity of chitin to cellulose, this method can be adopted for chitin measurement. The ADF-ADL method was adopted in this study to consider the content of quinone and catechol in the insect samples. Fig.1 shows an overview of the chitin content obtained from different samples subjected to the treatment methods. The ADF method showed the highest chitin content values (Table 1) in all the samples and was significantly higher than the ADF-ADL and acid-base method in the case of Puparia chitin. While there was no significant difference between the yield of chitin from ADF-ADL and the conventional acid-base method. The large gap between the Puparia chitin obtained from ADF compared to two other methods could be related to high content of catechol linked to chitin and protein due to sclerotization, which is the hardening process of insect exoskeleton through protein-protein or protein-chitin cross-linking. While ADF results do not specify the source of chitin either free or in a complex packed structure, the ADL treatment step can correct for this entangled chitin resulting in values that are closer to the values obtained by the Acid-base method. The observed chitin value of 20% and higher for the Puparia samples are in alignment with the previously reported results by T Hahn et al. The Adult insect samples had the lowest chitin content of 7-13%, which is following the existence of other components such as protein and lipid in the insect body. The obtained results for adult insect is aligned with the values of 106 g/kg and 86 g/kg previously reported by T Hahn et al., 2018 using the ADF method and Diener S et al., 2009 using the formic acid method respectively. In the case of chitosan, a maximum chitosan yield of 2% reported for adult BSF-chitosan and 11% for pupae shells-chitosan. This chitosan yield was obtained 15.40% from shrimp, 14% from krill, and 23% from crawfish.

Table 1. Chitin content of obtained from different fractions of Puparia, Flake and Adult insect using the three different isolation methods .

| | Chitin content (%) | | |
|---|---|---|---|
| | **Flake** | **Puparia** | **Adult Insect** |
| **ADF** | 28.41 ± 3.12 | 33.91 ± 4.62 | 13.64 ± 0.44 |
| **ADF-ADL** | 26.78 ± 2.17 | 21.19 ± 5.71 | 7.94 ± 1.92 |
| **Acid-Base** | 20.69 ± 2.47 | 25.39 ± 2.43 | 7.75 ± 0.49 |

*Chemical bonds (FTIR)*

The chemical composition of the chitin samples were characterized (Figure 7) using FTIR analysis, and the major characteristic peaks are listed in Table 2. There was a close similarity between the chemical composition and bonding of chitin from the puparia, adult insect and the commercial chitin which is aligned with the previously reported study (Wasko, Bulak et al. 2016). Chitin can be found in α, β, and γ crystalline form based on the source of the chitin. The α-crystal form of chitin has three peaks around 1660 $cm^{-1}$ and 1620 $cm^{-1}$, and 1550 $cm^{-1}$. While, the β-crystal form of chitin has only weak intramolecular hydrogen bonds around 1650 $cm^{-1}$. Puparia, Flake, and Adult insect samples showed three peaks around 1660-1665 $cm^{-1}$, 1620-1627 $cm^{-1}$, and 1558-1560 $cm^{-1}$ which attributed to the C=O secondary amide stretch (Amide I), C=O secondary amide stretch (Amide I), and N-H bend and C-N stretch (Amide II), respectively. These results indicated that the chitins extracted from the black soldier fly have the α-crystal form, like the commercial chitin extracted from shrimp. The peaks around 1650 $cm^{-1}$, 1620 $cm^{-1}$, and 1550 $cm^{-}$ were attributed to amide I of C-O, the amide II of N=H, and amide III of C=N stretching, respectively. The absence of a band at 1540 $cm^{-1}$ demonstrated no protein residues in the chitins, indicating the successful deproteinization process.

The FTIR results of puparia and Adult insect chitosans exhibited similarity to those of commercial shrimp chitosan, and chitosan extracts from insects such as potato beetle, grasshoppers, silkworm chrysalides and two orthoptera species. Determining the physicochemical characteristics of chitin and chitosan extracts from pupae shells and adult BSF showed that these extracts were similar in terms of quality and purity as commercially produced chitin and chitosan from shrimp.

Table 2. FTIR bands of the chitin isolated from black soldier fly fractions (Puparia, Flake and Adult insect) and the commercial chitin.

| Functional groups and vibration mode | Classification | Puparia | Flake | Adult insect | Commercial chitin |
|---|---|---|---|---|---|
| *O-H hydroxyl stretching* | | 3440 | 3445 | 3440 | 3441 |
| *N-H secondary amine asym. stretch* | Amide | 3271-3106 | 3270-3103 | 3269-3100 | 3268-3100 |
| *CH3 sym. stretch and CH2 asym. stretch* | Aliphatic compounds | 2927 | 2930 | 2929 | 2932 |
| *CH3 sym. stretch* | Aliphatic compound | 2888 | 2890 | 2886 | 2884 |
| *C O secondary amide stretch* | Amide I | 1665 | 1661 | 1660 | 1654 |
| *C O secondary amide stretch* | Amide I | 1620 | 1621 | 1623 | 1627 |
| *N-H bend, C-N* | stretch Amide II | 1558 | 1559 | 1559 | 1560 |
| *CH2 ending and CH3 deformation* | - | - | 1424 | - | - |
| *CH bend, CH3 sym. deformation* | - | - | 1380 | - | - |
| *CH2 wagging* | Amide III, components of protein | 1320 | 1322 | 1322 | 1318 |
| *C-O-C asym. stretch in phase ring* | Saccharide rings | 1074 | 1079 | 1075 | 1070 |
| *C-O asym. stretch in phase ring* | - | 1030 | 1031 | 1028 | 1024 |
| *CH ring stretching Saccharide rings* | Saccharide rings | 897 | 898 | 895 | 896 |

*Thermal properties*

Thermogravimetric analysis has been performed to investigate the thermal stability and degradation rate of extracted chitin from the samples (fig. 2). The TGA revealed two stages of degradation for all samples. In the first degradation stage, the weight loss could be attributed to the evaporation of moisture existed in the samples, which occurred between 0-150°C. In the first degradation stage, the mass loss of puparium, Flake, Adult insect, and commercial chitin was 7.39%, 9.67%, 8.52%, and 6.00%, respectively. No stable intermediate was formed during the thermal decomposition due to the single-stage decomposition. The second degradation stage was occurred between 260-450°C and the second mass loss of 64.74%, 51.75, 61.87, and 65.69 were recorded for Puparia, Flake, Adult insect, and commercial chitin, respectively. The second stage of degradation was assigned to decomposition of sugar structure, loss of water from sugar ring, and degradation of both acetylated and deacetylated chitin component.

Figure (3) indicates the differential thermal analysis (DTA) result of the samples. The maximum degradation temperatures (DTGmax) was recorded 366.1°C, 356.6°C, 356.7°C, and 345.4°C for Puparia, Flake, Adult insect, and commercial chitin, respectively.

There was not any significant difference in the thermal stability of all insect chitin samples. However, all three sample exhibited a higher maximum degradation temperatures ($DTG_{max}$) compared to the commercial chitin (Table 3) indicating higher thermal stability of isolated chitin from BSF than the commercially existed chitin. Adult BSF-chitin reported to have a higher $DTG_{max}$ value than the pupae shells-chitin, indicating that the adult BSF-chitin is slightly more thermally stable than the pupae shells-chitin, while commercial shrimp chitin was slightly more thermally stable than both of BSF and pupae shells chitins. This result is contradictory to our results which showed puparia as the sample with the highest thermal stability (Table 2).

There was no significant difference between degradation rate of chitin extracted by ADF-ADL method in comparison with the acid-base method indicating that ADF-ADL method can used as an effective method for isolation of

chitin with high purity.

Table 3. Thermal properties of chitin isolated from Puparia, Flake, Adult insect, and commercial chitin

| Sample | First degradation mass loss (0-150) | Second degradation mass loss (150-450) | Maximum degradation temperatures (DTG max) |
|---|---|---|---|
| **Puparia** | 7.39 % | 64.74 % | 366.1°C |
| **Flake** | 9.67 % | 51.75 % | 356.6 °C |
| **Adult insect** | 8.52 % | 61.87 % | 356.7 °C |
| **Commercial chitin** | 6.00 % | 65.69 % | 345.4 °C |

*Crystallinity (XRD)*

The XRD patterns of the chitin samples obtained from the two different extraction methods are presented in Figure 4 A and B. Chitin samples from the acid-base method showed large sharp peaks of $\alpha$ crystalline structure of the chitin at 9 and 19° and minor peaks at 12, 23 and 26° similar to the commercial chitin sample (black line). For the ADF-ADL samples, only the Puparia chitin showed a pattern closer to the commercial sample. While the Flake and the Adult insect chitin patterns showed the peak at 19 ° however, the peaks were broad, indicating to amorphous characteristics of these samples.

As shown, all insect-derived chitins had a lower CI compared to the commercial shrimp chitin, and ADF-ADL samples except Puparia chitin had significantly lower crystallinity compared to the samples obtained from the acid-base method. The CI observed in this study is in alignment with the previously reported works. Zimri et al., 2018 reported CI values of 49.6%, 50.3%, and 60.1% for Adult BSF-chitin, pupae shells-chitin, and commercial chitin, respectively. And the CI index value for chitins extracted from brown shrimp, pink shrimp, crab, and crayfish was 64%, 66.6%, 59.86%, and 56.94%, respectively. Low crystallinity chitin obtained from the insect can provide desirable sorption properties and high heavy-metal-removal efficiency due to low resistance to diffusion. The result of this study also showed that chitin fractions obtained via different steps at an Insect farm (Adult insect, puparia and Flakes) have different crystalline properties. In another study CI of 35% reported for BSF larval chitin and 24.9% for BSF imago chitin which is lower than other insect species with CI ranges from 40% to 80% depending on the species, growth phase, sex and isolation method.

| | Crystallinity (%) | | | |
|---|---|---|---|---|
| | Commercial | Flake | Puparia | Adult insect |
| | 86.8 | | | |
| **Acid-base** | | 61.1 | 74.1 | 77.8 |
| **ADFADL** | | 50.0 | 70.8 | 39.0 |

*Morphological properties (SEM)*

Scanning electron microscopy of the chitin samples is shown in Figure 5, indicating the heterogeneous particle size distribution for the commercial, Adult insect and puparia chitin samples, while a rough, packed flake structure was observed for the Flake chitin sample. At higher magnification (inset in 5) the Flake samples show a repeating honeycomb structure, similar morphology for BSF exoskeleton that has previously been reported.

SEM analysis of surface morphologies of pupae shells-chitin revealed that it is a tightly packed structure with repeating circular and hexagonal units in a honeycomblike arrangement, while the adult BSF-chitin consists of loosely packed oval units separated by circular-shaped structures with repeating arrangements of fibers. Both chitins are fibrous with no porosity. The commercial shrimp chitin did not exhibit nanofibrillar structure nor pores but showed layers of crumbling flakes with a smooth surface. In the case of chitins isolated using ADF-ADL method, the puparia and Flake samples were more homogeneous, fluffy powder compared to the samples obtained from the Acid-Base technique. The commercially obtained chitosan from shrimp reported having slightly rougher than the adult BSF-chitosan.

*C and N analysis*

Based on the elemental analysis, for the acid-base samples C and N content of 40.3% and 5.6% obtained for pupae shells-chitin, 42.1% and 5.8% for adult BSF-chitin and 44.8% and 6.5% for commercial shrimp chitin, respectively. For the samples from the ADF-ADL method, C and N content of 29.7% and 3.4% for pupae shells chitin, 38.9% and 4.5% for Flake and 55.3% and 13.1% for the adult insect chitin was obtained.

The percentage of N content present in adult BSF-chitin was higher than that of pupae shells chitin, flake and commercial shrimp chitin, and both were observed to be lower than the amount of 6.89%, which is the reference N content typical for fully acetylated chitin, these results are in agreement with the previously reported data by Leke-Aladekoba, 2018.

The degree of acetylation (DA) of the extracted chitins were 95 and above for all the samples (Table 4) and the extraction method had no significant different on the DA of the samples. Leke- Aladekoba, 2018 reported the DA of 91.5%, 115.1% for the extracted chitin value of adult BSF, pupae shells which is close to the result of this study. The DA was also determined to be 102% for cicada sloughs, 104% for rice-field crab shells, 87% for bumblebees, 93% for the beetle. The levels higher and lower than 100% implies that some protein and mineral residues have been remained with chitin extract and obtaining pure chitin has been difficult.

The extraction methods and source of chitin utilized can have an overall effect on the DA values and the chitin composition. For instance, the DA value of the BSF meal (BSFM) chitin obtained from the commercial extraction (96.4%) and ultrasound assisted extraction (97.5%) is compared with microwave assisted extraction (80.6%) and enzymatic assisted extraction (110.3%). The results indicate that the chitin with high purity was extracted by both methods, and the protein residues were successfully removed which is align with the FTIR results.

Table 4. Degree of acetylation (DA) of the chitin samples calculated from the FTIR spectra and the elemental analysis (Carbon and Nitrogen).

| | **Elemental analysis** | |
|---|---|---|
| | ADF-ADL (%) | Acid-base (%) |
| **Puparia** | 98 | 97 |
| **Flake** | 98 | 96 |
| **Adult insect** | 95 | 97 |

**Conclusion**

This study is the first report highlighting the valorization of biopolymer from an insect farm and evaluate the physicochemical properties of the isolated chitin. The insect farm sidestreams of puparia (insect shell) and flakes contain more than 20% of chitin which had lower crystallinity compared to the commercial shrimp chitin. Puparia had the highest chitin content indicating that Puparia can be valorized a rich source of chitin and the insect chitin samples exhibited higher thermal stability compared to the commercial chitin in both extraction methods. Moreover, isolated chitin through the ADF-ADL method had more homogenous surface morphology compared to the acid-based method. The present result demonstrated that chitin from BSF has specific physicochemical properties that can be used in different applications such as wastewater treatment, textile industry, and biomedical application. Moreover, the ADF-ADL method can be used to extract chitin with high purity from different sources instead of conventional extraction methods. However, further investigation required to extract chitin from BSF with an eco-friendlier method for free-chemical extraction of chitin.

The present invention is in no way limited to the embodiments described in the examples and/or shown in the figures. On the contrary, methods according to the present invention may be realized in many different ways without departing from the scope of the invention.

**Claims**

**1.** Chitin or its derivative chitosan or chitosan hydrochloride wherein said chitin or said derivative have an $\alpha$-crystal structure and a crystallinity of less than 80%.

**2.** Chitin or its derivative chitosan or chitosan hydrochloride according to claim 1, wherein said chitin or said derivative have a thermal stability with a $DTG_{max}$ value of between about 350,0 °C to about 370,0 °C, measured by differential thermal analysis (DTA).

**3.** Chitin or its derivative chitosan or chitosan hydrochloride according to claims 1 or 2, wherein the crystallinity ranges from 30 to 80 %.

**4.** Chitin or its derivative chitosan or chitosan hydrochloride according to claims 1 or 2, wherein the crystallinity ranges from 45 to 50 %.

**5.** Chitin or its derivative chitosan or chitosan hydrochloride according to claims 1 or 2, wherein the crystallinity ranges from 70 to 80 %.

**6.** Chitin or its derivative chitosan or chitosan hydrochloride according to claims 1 or 2, wherein the crystallinity ranges from 30 to 50 %.

**7.** Chitin or its derivative chitosan or chitosan hydrochloride according to any of the previous claims, wherein said chitin or derivative has a molecular weight of 1-2000 kDa.

**8.** Chitin or its derivative chitosan or chitosan hydrochloride according to any of the previous claims, wherein said chitin or derivative has a C/N content ratio of at least 7, preferably obtained by using the acid base purification method.

**9.** Chitin or its derivative chitosan or chitosan hydrochloride according to any of the previous claims, wherein said chitin or derivative has a degree of acetylation of at least 95 %.

**10.** Chitin or its derivative chitosan or chitosan hydrochloride according to any of the previous claims, wherein said chitin or said derivatives are derived from insects.

**11.** Chitin or its derivative chitosan or chitosan hydrochloride according to any of the previous claims, wherein said chitin or said derivative is derived from Black Soldier Fly, more preferably from puparia, flakes or adult insects of Black Soldier Fly.

**12.** A composition comprising chitin or its derivative chitosan or chitosan hydrochloride of any of the claims 1 to 11 as active ingredient, wherein said composition is a liquid, a powder or a spray.

**13.** Composition according to claim 12, wherein the effective amount of chitin or its derivative is from about 0.05% to about 100%.

**14.** A coating for agricultural plants, fruits or vegetables, wherein said coating comprises, in amounts effective for biocontrol activity, the chitin or composition of any of the previous claims, effective for the biocontrol of pre- and postharvest diseases.

**15.** Coating according to claim 14, wherein the coating further comprises a surfactant, and at least 5 wt% polyalkylene glycol.

**16.** Coating according to claim 15, wherein the polyalkylene glycol has an average molecular weight in the range from 150 to 20000 g/mol.

**17.** Coating according to claims 15-16, wherein the polyalkylene glycol has a melting point below 50 °C.

**18.** Coating according to claims 15-17, wherein the polyalkylene glycol is polyethylene glycol or polypropylene glycol.

**19.** Coating according to claims 15-18, wherein the coating composition comprises at least 0,1 wt% surfactant.

**20.** Coating according to claims 15-19, wherein the surfactant is a nonionic surfactant.

**21.** Coating according to claims 15-20, wherein the coating composition comprises less than 1.0 wt% oil and wax.

**22.** Use of chitin or its derivative chitosan or chitosan hydrochloride, the composition or coating of any of the previous claims in pre- and post-harvest application of plants, fruits and vegetables or to control pre- or postharvest diseases.

**23.** Use according to claim 22, wherein the chitin or derivative, or composition or coating of any of the previous claims,

is applied to the surface of a plant, fruit or vegetable by spraying, sprinkling, brushing submerging, or any other means the plant, fruit or vegetable.

**24.** A method of protecting a plant, fruit or vegetable against pre- or postharvest decay, said method comprising coating, spraying, brushing, sprinkling or any other means to the surface of the plant, fruit or vegetable with an effective amount of the chitin, composition or coating of any of the previous claims.

**25.** A method of curing a plant, fruit or vegetable of pre- or postharvest decay, said method comprising coating, spraying, brushing, sprinkling or any other means to the surfaces of the plant, fruit or vegetable with an effective amount of the chitin, composition or coating of any of the previous claims.

**26.** A method to elicit a plant, fruit or vegetable of pre- or postharvest decay, said method comprising coating, spraying, brushing, sprinkling or any other means to the surfaces of the plant, fruit or vegetable with an effective amount of the chitin, composition or coating of any of the previous claims.

**27.** A method for coating plants, fruits or vegetables comprising the application of chitin, a coating or composition according to any of the previous claims to the surface of the food product.

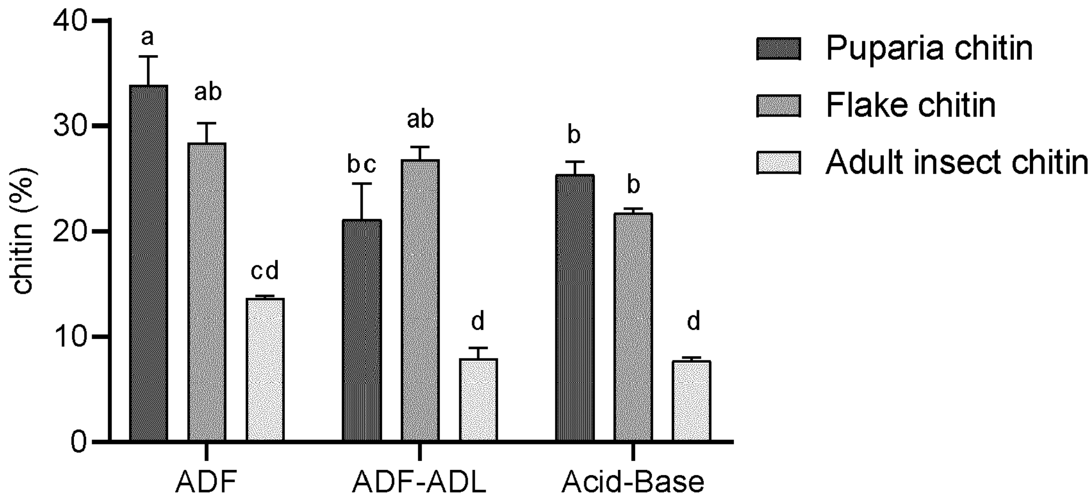
40
30
20
10
0
chitin (%)
a
ab
cd
bc
ab
d
b
b
d
ADF
ADF-ADL
Acid-Base
Puparia chitin
Flake chitin
Adult insect chitin

**FIG. 1**

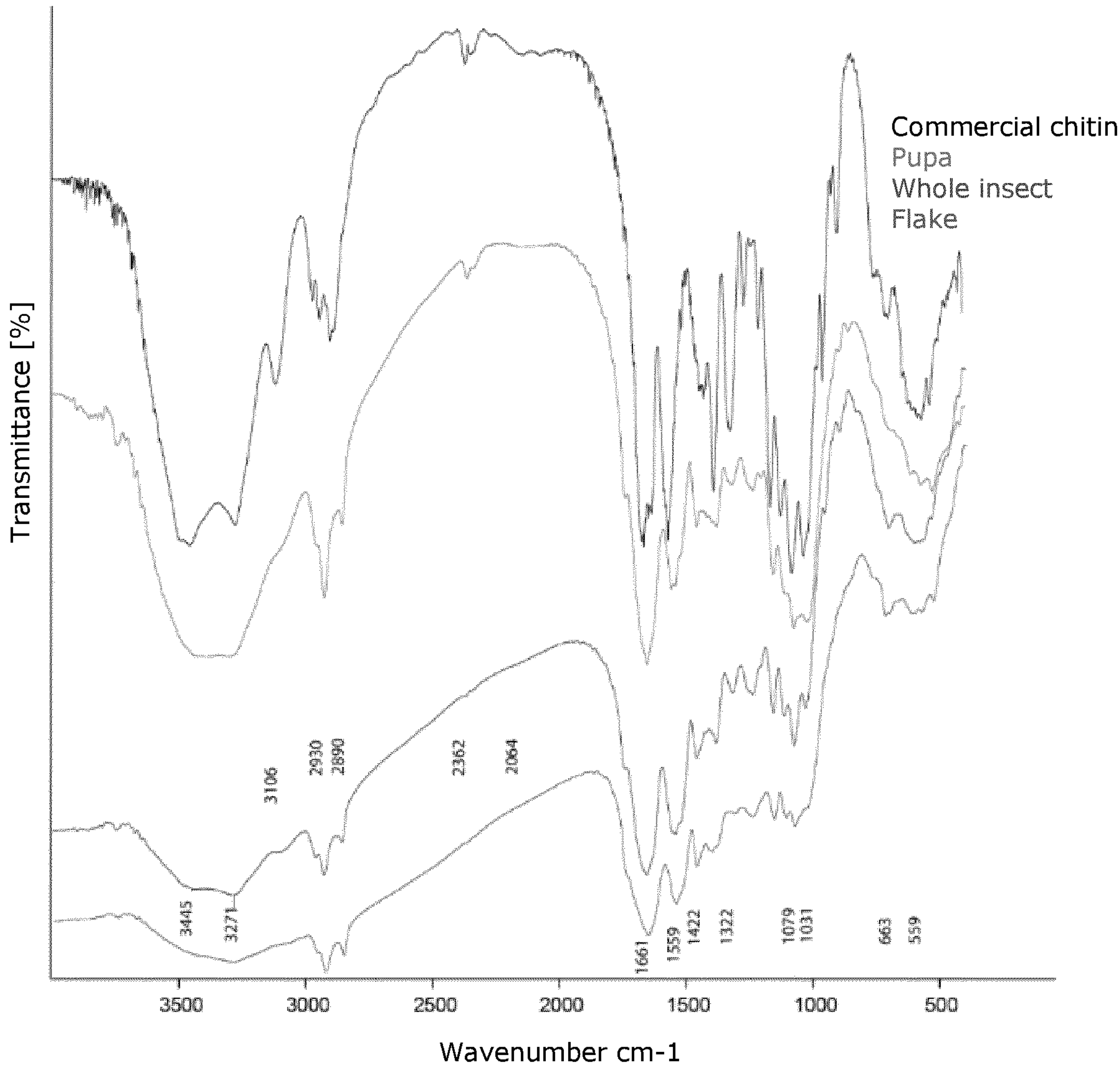
Commercial chitin
Pupa
Whole insect
Flake
Transmittance [%]
3106
2930
2890
2362
2064
3445
3271
1661
1559
1422
1322
1079
1031
663
559
3500
3000
2500
2000
1500
1000
500
Wavenumber cm-1

FIG. 2a

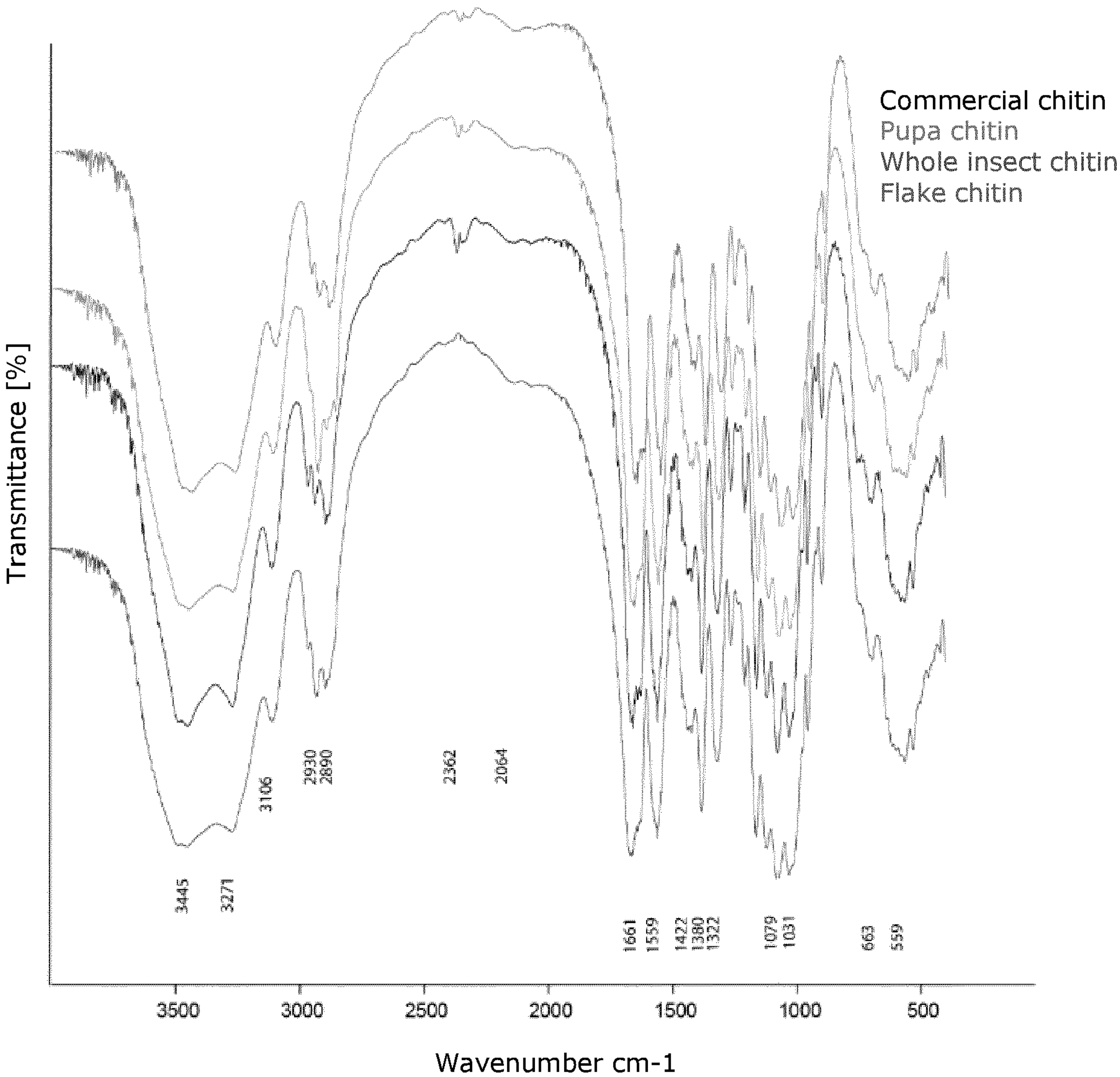
Commercial chitin
Pupa chitin
Whole insect chitin
Flake chitin
Transmittance [%]
3445
3271
3106
2930
2890
2362
2064
1661
1559
1422
1380
1322
1079
1031
663
559
3500
3000
2500
2000
1500
1000
500
Wavenumber cm-1

FIG. 2b

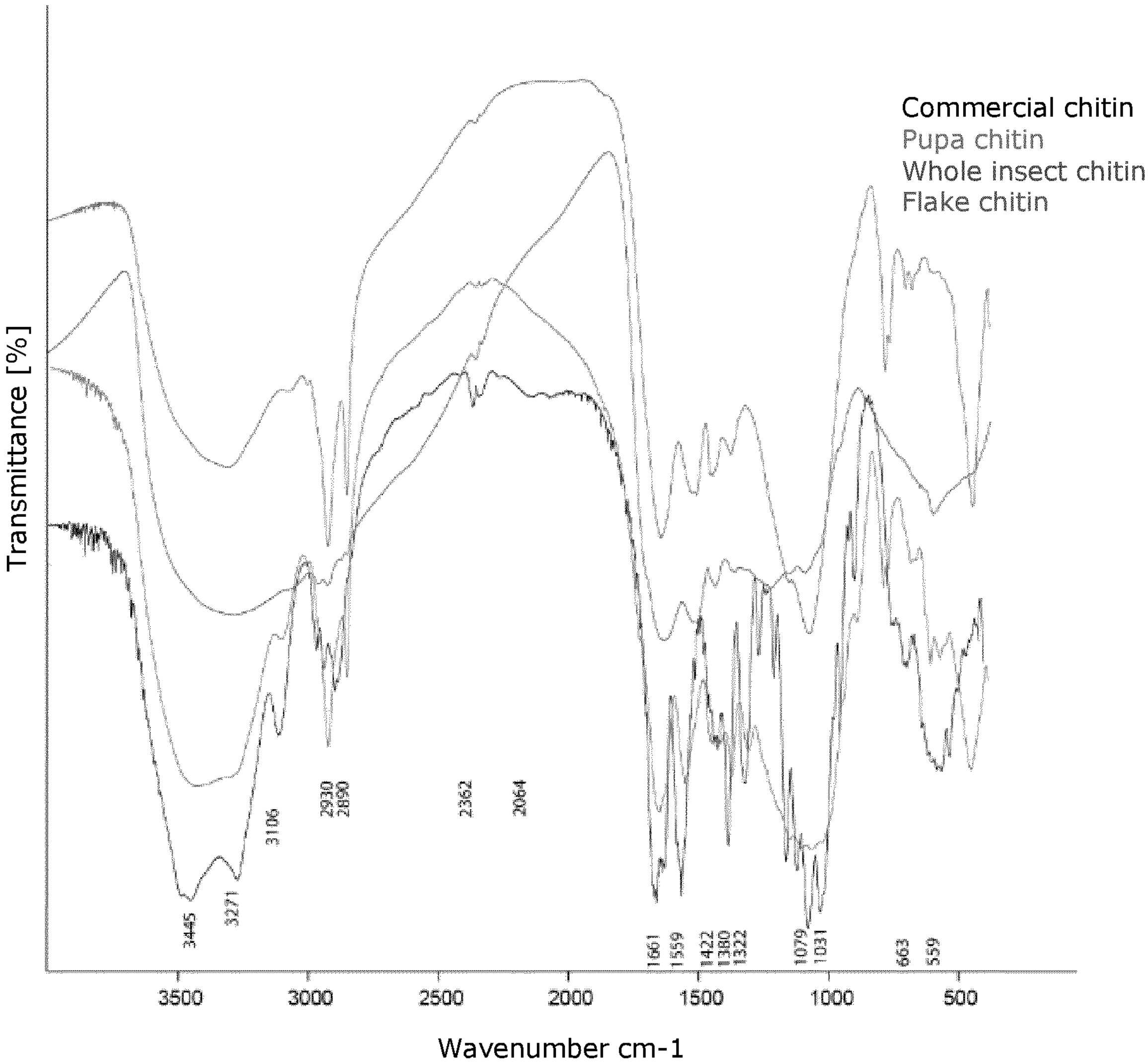

Commercial chitin
Pupa chitin
Whole insect chitin
Flake chitin
Transmittance [%]
Wavenumber cm-1
3445
3271
3106
2930
2890
2362
2064
1661
1559
1422
1380
1322
1079
1031
663
559
3500
3000
2500
2000
1500
1000
500


**FIG. 2c**

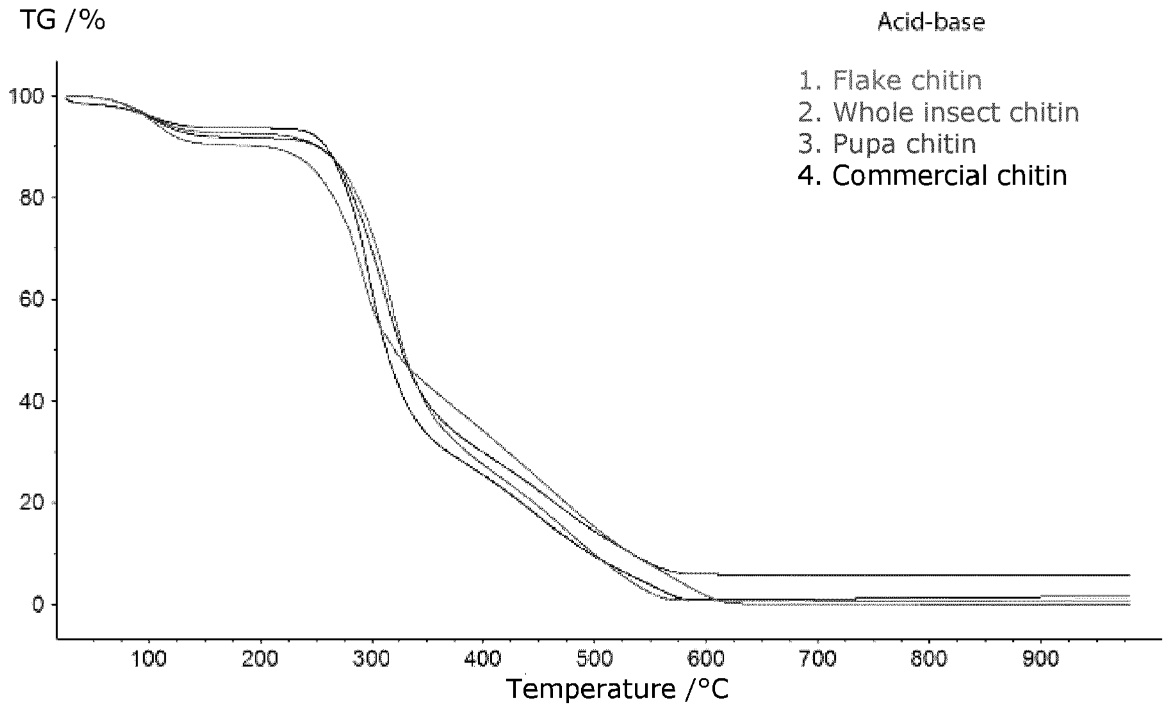
TG /%
Acid-base
1. Flake chitin
2. Whole insect chitin
3. Pupa chitin
4. Commercial chitin
100
80
60
40
20
0
100
200
300
400
500
600
700
800
900
Temperature /°C

**FIG. 3a**

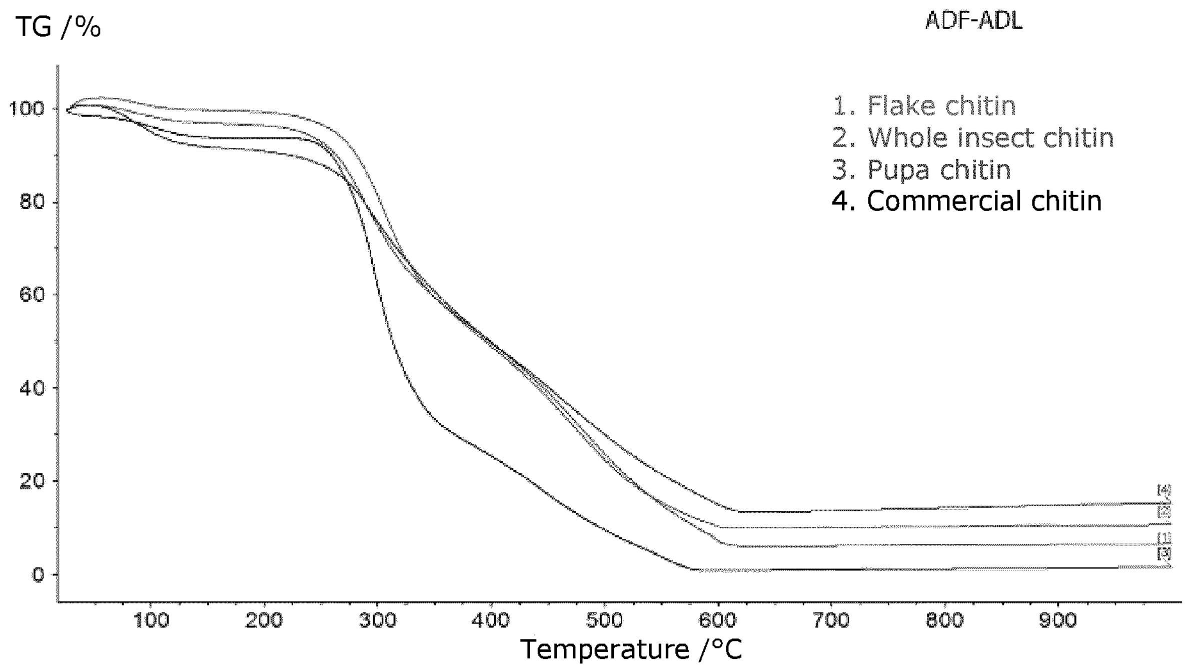
TG /%
ADF-ADL
1. Flake chitin
2. Whole insect chitin
3. Pupa chitin
4. Commercial chitin
100
80
60
40
20
0
100
200
300
400
500
600
700
800
900
Temperature /°C

**FIG. 3b**

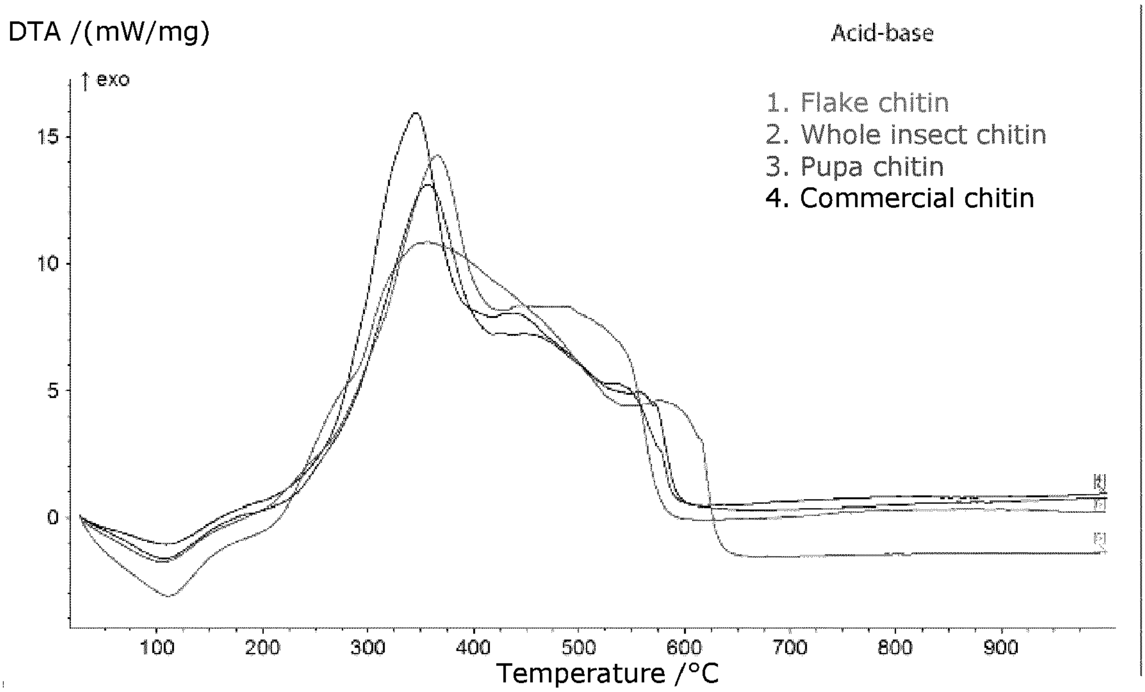
DTA /(mW/mg)
↑ exo
Acid-base
1. Flake chitin
2. Whole insect chitin
3. Pupa chitin
4. Commercial chitin
15
10
5
0
100 200 300 400 500 600 700 800 900
Temperature /°C

**FIG. 3c**

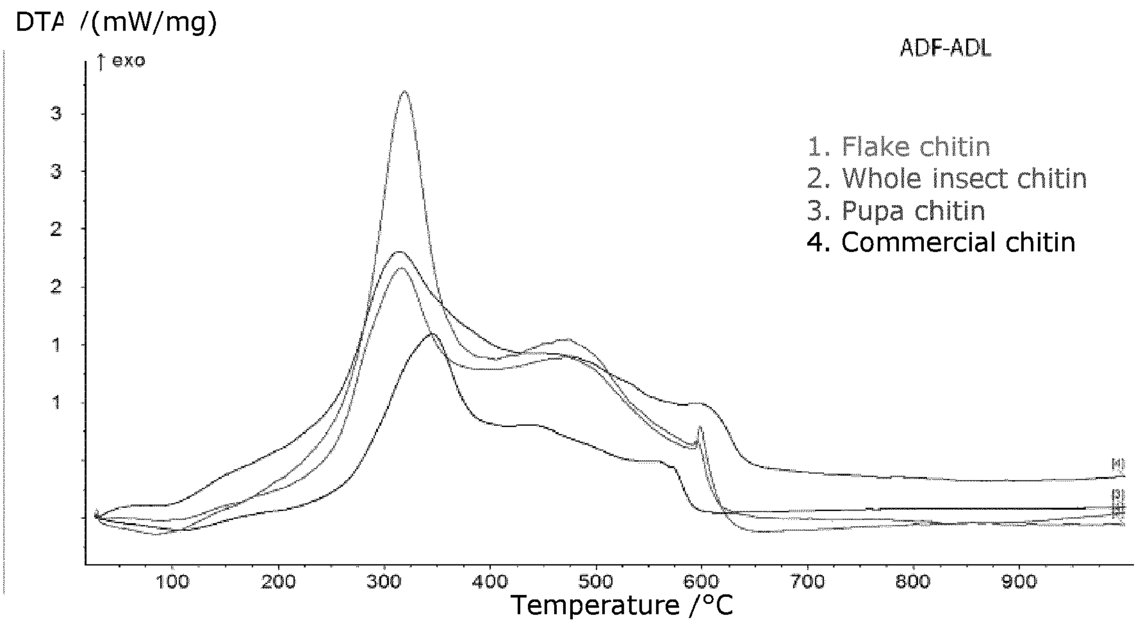
DTA /(mW/mg)
↑ exo
ADF-ADL
1. Flake chitin
2. Whole insect chitin
3. Pupa chitin
4. Commercial chitin
3
3
2
2
1
1
100 200 300 400 500 600 700 800 900
Temperature /°C

**FIG. 3d**

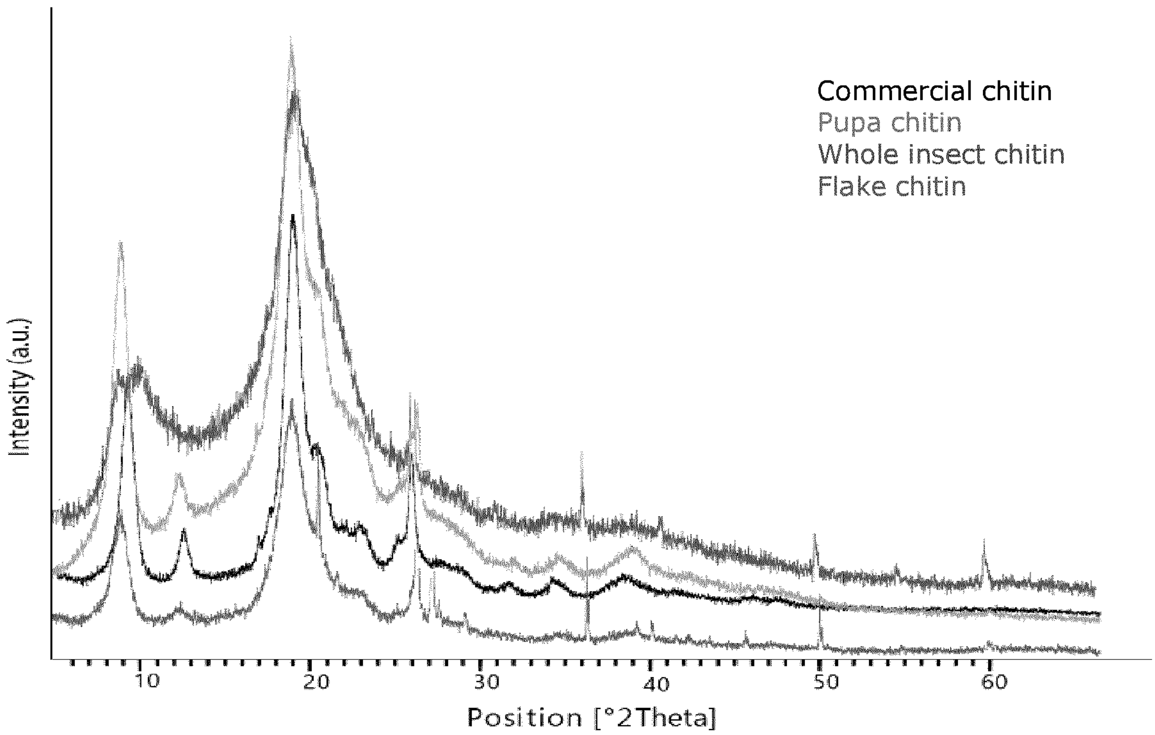
Commercial chitin
Pupa chitin
Whole insect chitin
Flake chitin
Intensity (a.u.)
10
20
30
40
50
60
Position [°2Theta]

FIG. 4a

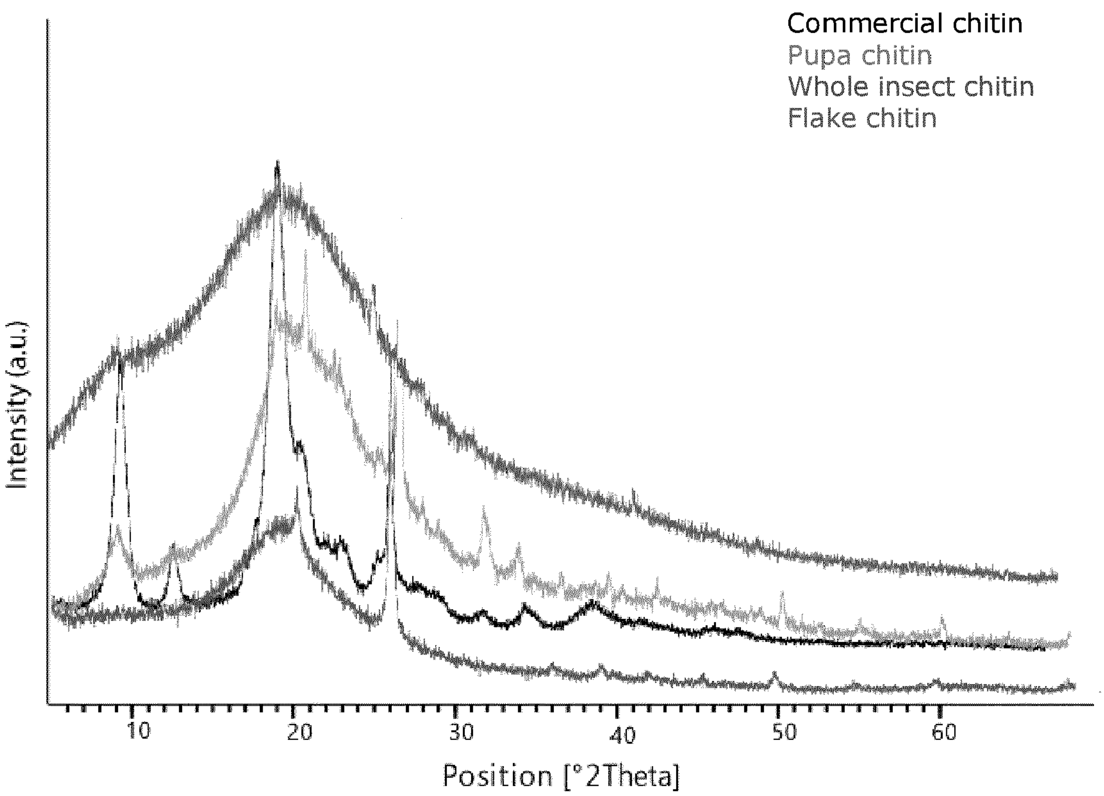
Commercial chitin
Pupa chitin
Whole insect chitin
Flake chitin
Intensity (a.u.)
10
20
30
40
50
60
Position [°2Theta]

FIG. 4b

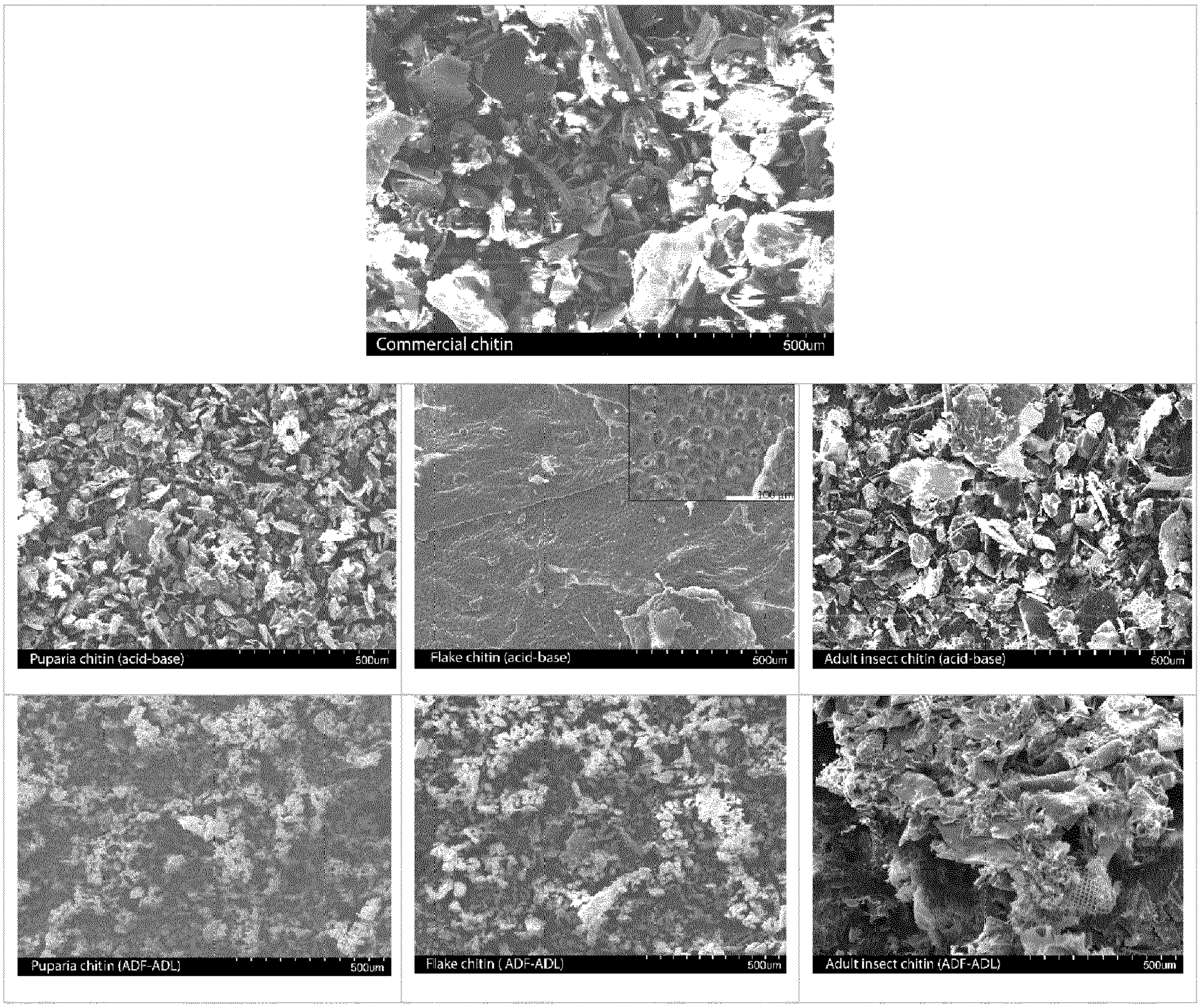
Commercial chitin
500um
Puparia chitin (acid-base)
500um
Flake chitin (acid-base)
500um
Adult insect chitin (acid-base)
500um
Puparia chitin (ADF-ADL)
500um
Flake chitin ( ADF-ADL)
500um
Adult insect chitin (ADF-ADL)
500um

FIG. 5

Europäisches Patentamt
European Patent Office
Office européen des brevets

# EUROPEAN SEARCH REPORT

Application Number
EP 21 16 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MURAT KAYA ET AL: "A physicochemical characterization of fully acetylated chitin structure isolated from two spider species: With new surface morphology", ACTA PAEDIATRICA. SUPPLEMENT, vol. 65, 1 April 2014 (2014-04-01), pages 553-558, XP055757531, NL ISSN: 0141-8130, DOI: 10.1016/j.ijbiomac.2014.02.010 * abstract; page 557, paragraph 3.4 * ----- | 1-14 | INV. C08B37/08 C08L5/08 C09D105/08 |
| X | MURAT KAYA ET AL: "First chitin extraction from Plumatella repens (Bryozoa) with comparison to chitins of insect and fungal origin", ACTA PAEDIATRICA. SUPPLEMENT, vol. 79, 1 August 2015 (2015-08-01), pages 126-132, XP055757534, NL ISSN: 0141-8130, DOI: 10.1016/j.ijbiomac.2015.04.066 * abstract; paragraph 3.6 * ----- | 1-14 | TECHNICAL FIELDS SEARCHED (IPC) |
| X | MURAT KAYA ET AL: "Comparison of chitin structures isolated from seven Orthoptera species", ACTA PAEDIATRICA. SUPPLEMENT, vol. 72, 1 January 2015 (2015-01-01), pages 797-805, XP055757540, NL ISSN: 0141-8130, DOI: 10.1016/j.ijbiomac.2014.09.034 * abstract; paragraph 3.2 * ----- -/-- | 1-14 | C08B C08L C09D |

1

The present search report has been drawn up for all claims

| Place of search | Date of completion of the search | Examiner |
|---|---|---|
| Munich | 9 September 2021 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches Patentamt
European Patent Office
Office européen des brevets

# EUROPEAN SEARCH REPORT

Application Number
EP 21 16 9688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUARUI WANG ET AL: "Physicochemical structure of chitin in the developing stages of black soldier fly", ACTA PAEDIATRICA. SUPPLEMENT, vol. 149, 1 April 2020 (2020-04-01), pages 901-907, XP055757548, NL ISSN: 0141-8130, DOI: 10.1016/j.ijbiomac.2020.01.293 * abstract; paragraph 3.4 * ----- | 1-14 | |
| X | ADAM WASKO ET AL: "The first report of the physicochemical structure of chitin isolated from Hermetia illucens", ACTA PAEDIATRICA. SUPPLEMENT, vol. 92, 1 November 2016 (2016-11-01), pages 316-320, XP055757551, NL ISSN: 0141-8130, DOI: 10.1016/j.ijbiomac.2016.07.038 * abstract; paragraph 3.5 * ----- | 1-14 | TECHNICAL FIELDS SEARCHED (IPC) |
| X | M. ZHANG ET AL: "Structure of insect chitin isolated from beetle larva cuticle and silkworm (Bombyx mori) pupa exuvia", ACTA PAEDIATRICA. SUPPLEMENT, vol. 27, no. 1, 1 March 2000 (2000-03-01), pages 99-105, XP055757554, NL ISSN: 0141-8130, DOI: 10.1016/S0141-8130(99)00123-3 * abstract; table 1 * ----- -/-- | 1-14 | |

1

The present search report has been drawn up for all claims

| Place of search | Date of completion of the search | Examiner |
|---|---|---|
| Munich | 9 September 2021 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 16 9688

| Category | Citation of document with indication, where appropriate, of relevant passages | Relevant to claim | CLASSIFICATION OF THE APPLICATION (IPC) |
|---|---|---|---|
| X | HUET GAEL ET AL: "Straightforward extraction and selective bioconversion of high purity chitin from Bombyx eri larva: Toward an integrated insect biorefinery", CARBOHYDRATE POLYMERS, APPLIED SCIENCE PUBLISHERS, LTD. BARKING, GB, vol. 228, 28 September 2019 (2019-09-28), XP085866518, ISSN: 0144-8617, DOI: 10.1016/J.CARBPOL.2019.115382 [retrieved on 2019-09-28] * abstract; table 2 * ----- | 1-14 | |
| X | PURKAYASTHA DEBASREE ET AL: "Physicochemical Structure Analysis of Chitin Extracted from Pupa Exuviae and Dead Imago of Wild Black Soldier Fly (", JOURNAL OF POLYMERS AND THE ENVIRONMENT, SPRINGER NEW YORK LLC, US, vol. 28, no. 2, 27 November 2019 (2019-11-27), pages 445-457, XP037000169, ISSN: 1566-2543, DOI: 10.1007/S10924-019-01620-X [retrieved on 2019-11-27] * abstract; page 450, col.2, para.2 * ----- | 1-14 | TECHNICAL FIELDS SEARCHED (IPC) |
| X | CN 107 057 472 A (WUZHONG DISTRICT QIONGLONGSHAN TIANZHONG POLYMER MATERIAL TECH RESEARC) 18 August 2017 (2017-08-18) * para. "Backgroud technology"; claims 1, 4 * ----- | 1-27 | |

The present search report has been drawn up for all claims

1

| Place of search | Date of completion of the search | Examiner |
|---|---|---|
| Munich | 9 September 2021 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 16 9688

This annex lists the patent family members relating to the patent documents cited in the above-mentioned European search report. The members are as contained in the European Patent Office EDP file on
The European Patent Office is in no way liable for these particulars which are merely given for the purpose of information.

09-09-2021

| Patent document cited in search report | Publication date | Patent family member(s) | Publication date |
| --- | --- | --- | --- |
| CN 107057472 A | 18-08-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107057472


### Non-patent literature cited in the description


- **MURAT KAYA et al.** *International Journal of Biological Macromolecules,* 2014, vol. 65
- **MURAT KAYA et al.** *International Journal of Biological Macromolecules,* 2015, vol. 79
- **MURAT KAYA et al.** *International Journal of Biological Macromolecules,* 2015, vol. 72
- **HUARUI WANT et al.** *International Journal of Biological Macromolecules,* 2020, vol. 149
- **ADAM WASKO et al.** *International Journal of Biological Macromolecules,* 2016, vol. 92
- **M. ZANG et al.** *International Journal of Biological Macromolecules,* 2000, vol. 27
- **HUET GAEL et al.** *Carbohydrate Polymers,* 2020, vol. 228
- **PURKAYASTHA et al.** *Journal Of Polymer And Environment,* 2020, vol. 28